# EUROPÄISCHE PATENTSCHRIFT

(11) **EP 0 579 049 B1**
(45) Veröffentlichungstag und Bekanntmachung des Hinweises auf die Patenterteilung: **12.07.1995**
(21) Anmeldenummer: 93110515.9
(22) Anmeldetag: 01.07.1993
(51) Int. Cl.: C09C 1/30, C09C 3/12

(54) **Verfahren zur Hydrophobierung von pyrogen hergestelltem Siliciumdioxid**
Process for rendering pyrogenic silica hydropholic
Procédé d'hydrophobisation de silice pyrogénique

(30) Priorität: 02.07.1992 DE 4221716
(43) Veröffentlichungstag der Anmeldung: 19.01.1994
(73) Patentinhaber: Wacker-Chemie GmbH, 81737 München (DE)
(72) Erfinder: Kratel, Günter, Dr., D-8961 Durach-Bechen (DE); Mühlhofer, Ernst, Dr., D-8961 Sulzberg/Allg. (DE); Scherm, Peter, Dr., D-8261 Emmerting (DE)

(56) Entgegenhaltungen:
- GB-A- 1 496 553
- US-A- 3 924 029
- PATENT ABSTRACTS OF JAPAN, vol. 5, no. 62 (C-52), 25. April 1981; & JP-A-56 014 414
- DATABASE WPI, Derwent Publications Ltd., London, GB, AN 68-16086Q; & SU-A-203 207

## Beschreibung

Die Erfindung betrifft ein Verfahren zur kontinuierlichen Hydrophobierung von pyrogen hergestelltem, hochdispersem Siliciumdioxid bei niedrigen Temperaturen unter Einsatz von Methanol.

Es ist aus der DE-PS 11 63 784 bekannt, auf pyrogenem Weg erzeugtes Siliciumdioxid, das an seiner Oberfläche Silanolgruppen aufweist, mit Hilfe von Dimethyldichlorsilan in Gegenwart von Wasserdampf und unter Inertisierung z.B. mit Stickstoff im Gleichstrom-Verfahren bei 200 - 800°C, vorzugsweise bei 400 - 600°C im Wirbelbett zu hydrophobieren.

Bekannte Verfahren haben den Nachteil, daß die Hydrophobierungsreaktion bei hohen Temperaturen durchgeführt werden muß. Es muß also viel Energie in Form von Wärme zugeführt werden. Dies erhöht u.a. die Herstellungskosten für das hydrophobierte Produkt.

Patent Abstracts of Japan, vol. 5, no. 62 (C-52) 25, 1981 (& JP-A-56 014 414) offenbart ein Verfahren zur Hydrophobierung von Silica, das unter Zusatz von wasserlöslichen Alkoholen durchgeführt wird
Aufgabe der Erfindung ist die Bereitstellung eines Verfahrens zur Hydrophobierung von Siliciumdioxid, welches bei niedrigen Temperaturen arbeitet.

Die Aufgabe wird gelöst durch ein Verfahren zur kontinuierlichen Hydrophobierung von aus Siliciumhalogenverbindungen pyrogen hergestelltem Siliciumdioxid mittels Organohalogensilanen dadurch gekennzeichnet, daß zusätzlich Methanol eingesetzt wird.

Das in bekannter Weise aus Siliciumhalogenverbindungen pyrogen erzeugte Siliciumdioxid wird nach Abtrennung der Rauchgase unter Einsatz eines Organohalogensilans als Hydrophobierungsmittel, Methanol als Hydrophobierungshilfsmittel, von Wasserdampf sowie unter Zuführung eines Inertgases hydrophobiert. Die Hydrophobierung wird bevorzugt im Gegenstromverfahren durchgeführt.

In einer bevorzugten Ausführungsform wird das erfindungsgemäße Verfahren in einem Verbundsystem mit dem Verfahren zur Herstellung des pyrogenen Siliciumdioxids durchgeführt.

Von dem aus Siliciumhalogenverbindungen pyrogen erzeugten Siliciumdioxid werden die Rauchgase beispielsweise mittels geeigneter Filter abgetrennt. Das SiO₂ wird zur Hydrophobierung sodann bevorzugt von oben in einen dafür geeigneten siloartigen Reaktionsraum geleitet. Der Reaktionsraum ist bevorzugterweise wärmeisoliert. Er wird durch das abgeschiedene warme Siliciumdioxid auf die für die erfindungsgemäße Hydrophobierung notwendige Temperatur erwärmt. In den Reaktionsraum wird nach Erreichen des erwünschten Befüllungsgrades dampfförmig Hydrophobierungsmittel, Hydrophobierungshilfsmittel, Wasserdampf und Inertgas eingeleitet. Die Zufuhr dieser Substanzen erfolgt bevorzugt im unteren Drittel des Reaktionsraumes. Die Substanzen werden mit einer Temperatur zwischen 110 und 140 °C bevorzugt 120 und 130 °C, besonders bevorzugt mit 125 °C eindosiert. Bevorzugterweise sind Hydrophobierungsmittel, Hydrophobierungshilfsmittel und/oder Wasserdampf beim Zudosieren mit Inertgas verdünnt.

Die Hydrophobierung des Siliciumdioxids erfolgt bei Temperaturen von 60°C bis 350 °C bevorzugt von 80 bis 150 °C über einen Zeitraum von 2 bis 5 bevorzugt 3 bis 4 Stunden.

Als Hydrophobierungsmittel werden bekannte Organohalogensilane verwendet. Bevorzugt werden Alkylchlorverbindungen, besonders bevorzugt Dimethyldichlorsilan eingesetzt.

Als Hydrophobierungshilfsmittel wird Methanol eingesetzt.

Das Hydrophobierungshilfsmittel wird in Mengen von 2 bis 15 Gew. % bevorzugt in Mengen von 2 bis 10 Gew. % bezogen auf das Gewicht der eingesetzten Kieselsäure eingesetzt.

Als Inertgas wird bevorzugt Stickstoff verwendet.

Durch den Einsatz eines erfindungsgemäßen Hydrophobierungshilfsmittels ist es möglich, die Hydrophobierung von pyrogen erzeugtem SiO₂ mit einem erheblich geringerem Energieaufwand als bisher üblich durchzuführen. Das erfindungsgemäße Verfahren ermöglicht zudem eine gute Hydrophobierung des Siliciumdioxids auch bei einem hohen Mengendurchfluß an Siliciumdioxid.

Anhand der Zeichnungen werden verschiedene Ausführungsformen des erfindungsgemäßen Verfahrens dargestellt. Die Anwendungsmöglichkeit des erfindungsgemäßen Verfahrens ist jedoch nicht auf diese Ausführungsformen beschränkt.

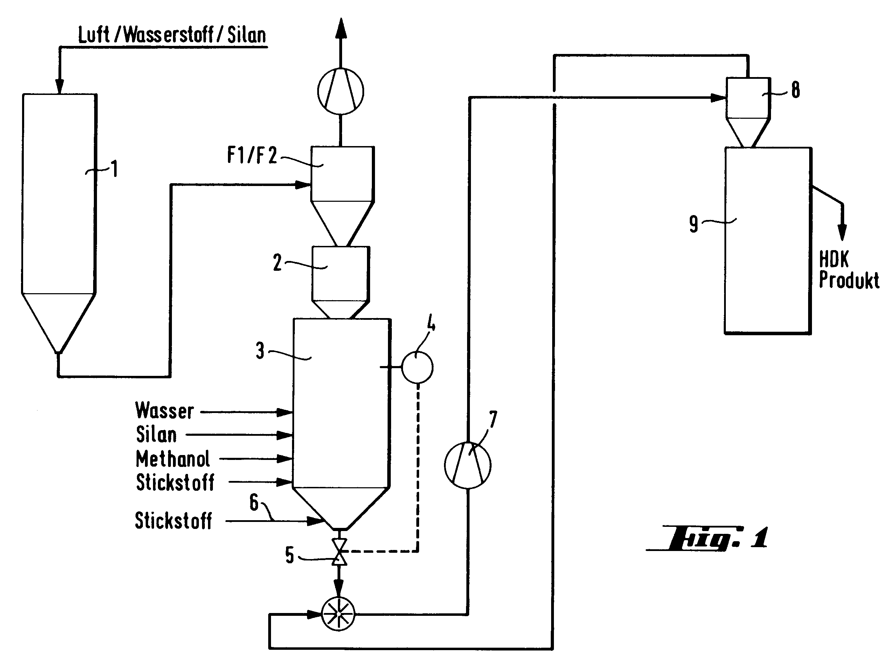

Bei der in Fig.1 dargestellten Ausführungsform wird in einer Brennkammer 1 Siliciumdioxid durch Verbrennen eines Organohalogensilans erzeugt. Dies geschieht beispielsweise durch Verbrennen von Methyldichlorsilan mit Luft. Mittels der Filter F1/F2 werden die chlorwasserstoff- und chlorhaltigen Rauchgase vom pyrogen erzeugten SiO₂ abgetrennt. Das Siliciumdioxid gelangt über einen Zwischentrichter 2 in den Reaktionsraum, der im folgenden als Hydrophobierungssilo bezeichnet wird. In dem Hydrophobierungssilo 3 wird der Siliciumdioxid-Füllstand mittels einer Apparatur zur Füllstandsmessung 4 registriert und mittels einer durch diese Apparatur gesteuerten Regeleinrichtung 5 auf dem gewünschten Füllstand gehalten. Zur Ermittlung des Füllstands im Hydrophobierungssilo wird bevorzugt eine radioaktive Füllstandsmessung verwendet. Als Regeleinrichtung 5 ist eine Regelklappe besonders geeignet. Im unteren Drittel des Silos werden dampfförmig und jeweils mit erwärmten Inertgas verdünnt bei einer Temperatur von 110 bis 140 °C Hydrophobierungsmittel, Hydrophobierungshilfsmittel, Wasserdampf und weiteres Inertgas eindosiert.

Durch Inertgasimpulse 6 direkt über der Regelklappe 5 wird der Siliciumdioxid-Fluß durch die Regelklappe 5 gewährleistet. Zudem wird dadurch vermieden, daß größere Mengen an Chlorwasserstoffgas oder Hydrophobierungsmittel in den Fließbett-Trockner 9 gelangen.

Das hydrophobierte Siliciumdioxid wird aus dem Hydrophobierungssilo 3 über einen Förderkreislauf, umfassend mindestens einem Ventilator 7 und mindestens einem Zyklon 8 dem Fließbett-Trockner 9 zugeführt. Dort wird das hydrophobierte Siliciumdioxid entsäuert.

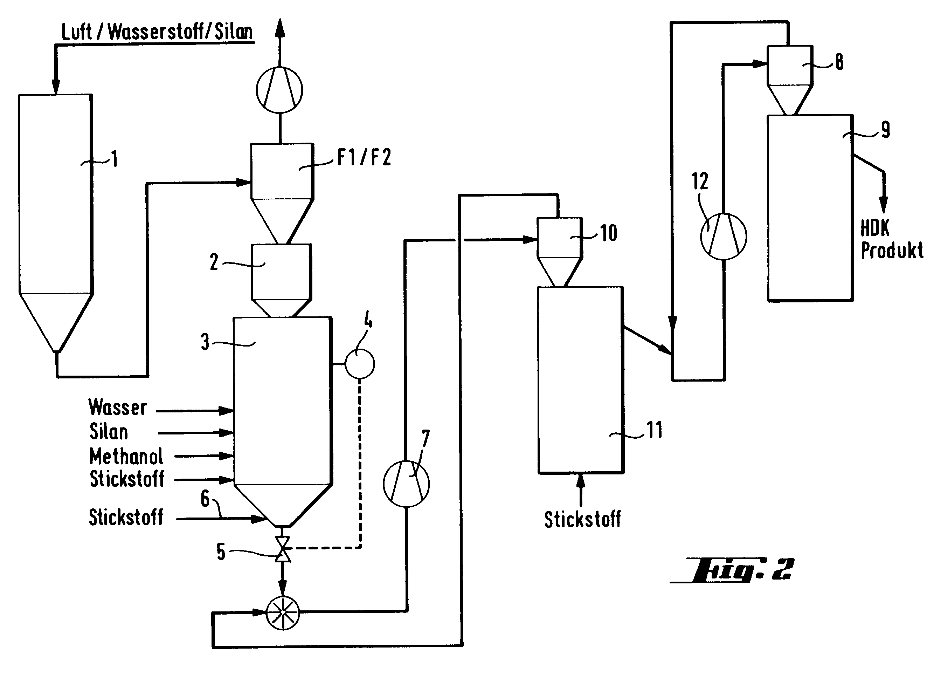

Eine andere Ausführungsform des erfindungsgemäßen Verfahrens ist in Fig. 2 dargestellt. Die Herstellung der pyrogenen Kieselsäure sowie die Hydrophobierung unter Einsatz des Hydrophobierungshilfsmittels erfolgt wie für Fig. 1 beschrieben. In dieser Ausführungsform werden bevorzugt 2 bis 4 Gew. % des Hydrophobierungshilfsmittels, bezogen auf das Gewicht der eingesetzten Kieselsäure, eingesetzt. Das hydrophobierte Siliciumdioxid wird aus dem Hydrophobierungssilo 3 über die Regelklappe 5 mittels eines Ventilators 7 und eines Zyklons 10 in einen Wirbelbettreaktor 11 befördert. Dort wird es auf 300 bis 350 °C erhitzt und anschließend über einen Förderkreislauf aus Ventilator 12 und Zyklon 8 in den Fließbett-Trockner 9 gefördert. Durch die Verwendung des Wirbelbettreaktors läßt sich die einzusetzende Menge an Hydrophobierungshilfsmittel um bis zu 70 % im Vergleich zu der in Fig. 1 dargestellten Ausführungsform verringern.

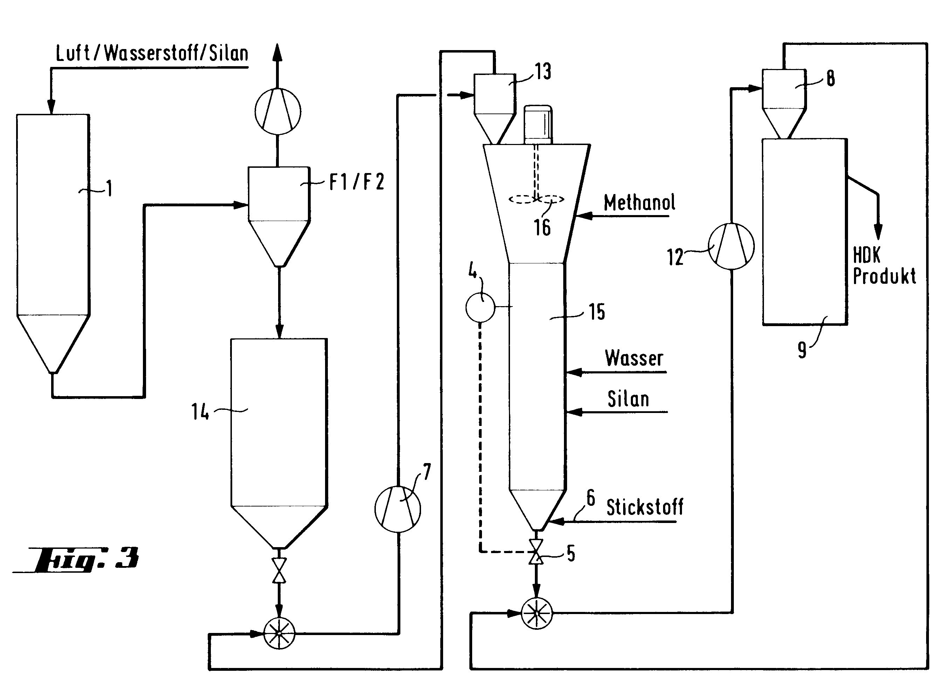

Eine weitere Ausführungsform des erfindungsgemäßen Verfahrens bei der Hydrophobierungssilo und Wirbelbettreaktor in einem Reaktor vereinigt sind ist in Fig. 3 beschrieben:
In einer Brennkammer 1 wird Siliciumdioxid in bekannter Weise durch Verbrennen eines Organohalogensilans erzeugt. Mittels der Filter F1/F2 werden die chlorwasserstoff- und chlorhaltigen Rauchgase abgetrennt. Das pyrogen erzeugte Siliciumdioxid gelangt zunächst in einen Pufferbehälter 2 und von dort über einen Ventilator 7 und einen Zyklon 3 in den Reaktor 15. Der Reaktor ist aus einem erweiterten konischen Oberteil und einem röhrenförmigen Unterteil aufgebaut. Das erweiterte Oberteil des Reaktors 15 wird bevorzugt von außen auf eine Temperatur von 80 bis 120 °C beheizt. Der Reaktor ist mit einer Füllstandsmessvorrichtung 4 ausgestattet, die eine Regelvorrichtung am Reaktorausgang 5 ansteuert. Weiterhin ist der Reaktor im oberen Teil mit einer Vorrichtung 16 zum Fluidisieren des Siliciumdioxids ausgestattet. Bevorzugt dafür geeignet ist ein Rührer. Am unteren Ende des Reaktoroberteils wird ein Gemisch aus Inertgas und Hydrophobierungshilfsmittel bei etwa 125 °C eindosiert. Im unteren Bereich des röhrenförmigen Reaktorteils dessen Wandung auf etwa 350 °C erwärmt wird, werden durch jeweils mindestens eine Einleitungsstelle ein Gemisch aus Wasserdampf und Inertgas sowie ein Gemisch aus Hydrophobierungsmittel und Inertgas jeweils gasförmig eingeleitet. Bevorzugt wird dort zudem beispielsweise über eine Regelklappe Impuls-Stickstoff eindosiert. Das hydrophobierte, pyrogene Siliciumdioxid wird mittels eines Förderkreislaufs über den Ventilator 12 und den Zyklon 8 in einen Trockner 9 transportiert, dort entsäuert und zur Homogenisierung in Silos befördert.

Die folgenden Beispiele dienen der weiteren Erläuterung der Erfindung.

### Beispiel 1

In einer Anlage, die Fig. 1 entspricht, werden aus der Reaktionsflamme, in der 108 kg/h Methyltrichlorsilan und Wasserstoff verbrannt werden, 43 kg/h SiO₂ in das wärmeisolierte Hydrophobierungssilo abgeschieden.
In dieses Hydrophobierungssilo, dessen Temperatur im Oberteil 135 - 137°C und in der Silomitte 109-110°C beträgt, und dessen Innendruck mittels eines Handschiebers 13 auf +13 und +29 mbar gehalten wird, werden über getrennte Leitungen 4,5 kg/h Dimethyldichlorsilan (verdünnt mit 0,8 m³/h Stickstoff), 3,3 kg/h Methanol (verdünnt mit 0,8 m³/h Stickstoff), 1,5 - 2 kg/h Wasser (verdünnt mit 1 m³/h Stickstoff) gasförmig mit 125°C eindosiert.
In das Oberteil des Hydrophobierungssilos wird 1 m³/h Stickstoff zugegeben. Als Impuls-Stickstoff werden über der Niveau-Regelklappe am unteren Ende des Hydrophobierungssilos 3 m³/h Stickstoff zugegeben.
Das hydrophobierte SiO₂ durchläuft den Fließbett-Trockner bei Temperaturen zwischen 240°C und 280°C und einem Unterdruck von -4,5 mbar. Das hierbei gewonnene Oberflächen-hydrophobierte SiO₂ zeigt folgende Eigenschaften:

| | |
|---|---|
| Oberfläche nach BET | 165 m²/g |
| pH | 4,1 |
| Kohlenstoffgehalt | 1,03% |

### Beispiel 2

In einer Anlage, die Fig. 2 entspricht, werden aus der Reaktionsflamme, in der 108 kg/h Methyltrichlorsilan und Wasserstoff verbrannt werden, 43 kg/h SiO₂ in ein wärmeisoliertes Hydrophobierungssilo 3 abgeschieden.
In dieses Hydrophobierungssilo, dessen Temperatur im Oberteil 128 - 130°C und in der Silomitte 103-108°C beträgt, und dessen Innendruck auf +3 und +32 mbar gehalten wird, werden über getrennte Leitungen 4,8 kg/h Dimethyldichlorsilan (verdünnt mit 0,8 m³/h Stickstoff) 1,0 kg/h Methanol (verdünnt mit 0,8 m³/h Stickstoff), 1,5 - 1,8 kg/h Wasser (verdünnt mit 1 m³/h Stickstoff) gasförmig mit 125°C eindosiert. In das Oberteil des Hydrophobierungssilos wird 1 m³/h Stickstoff zugegeben. 4 m³/h Impuls-Stickstoff werden über der Niveau-Regelklappe 5 zugegeben.
Im Anschluß an das Hydrophobierungssilo durchläuft das SiO₂ den Wirbelbettreaktor 11, dem weitere 5 m³/h Stickstoff aufgegeben werden, und in dem das SiO₂ auf Temperaturen zwischen 305 und 348 °C gebracht wird. Im Wirbelbettreaktor herrscht ein Unterdruck von -1 mbar. Nach dem Wirbelbettreaktor wird das hydrophobierte SiO₂ durch einen Trockner bei Temperaturen zwischen 290 und 300°C geschleust.

Das gewonnene Oberflächen-hydrophobierte SiO₂, hat folgende Eigenschaften:

| | |
|---|---|
| Oberfläche nach BET | 173 m²/g |
| pH | 4,2 |
| Kohlenstoffgehalt | 1,19% |

## Patentansprüche

1. Verfahren zur kontinuierlichen Hydrophobierung von aus Siliciumhalogenverbindungen pyrogen hergestelltem Siliciumdioxid mittels Organohalogensilanen, dadurch gekennzeichnet, daß zusätzlich Methanol verwendet wird.

2. Verfahren nach Anspruch 1, dadurch gekennzeichnet, daß es bei Temperaturen zwischen 60 und 350 °C durchgeführt wird.

3. Verfahren nach einem der Ansprüche 1 oder 2, dadurch gekennzeichnet, daß die Hydrophobierung des Siliciumdioxids in einem wärmeisolierten Hydrophobierungssilo durchgeführt wird.

4. Verfahren nach Anspruch 3, dadurch gekennzeichnet, daß das wärmeisolierte Hydrophobierungssilo mit einer radioaktiven Füllstandsmessung ausgestattet ist.

5. Verfahren nach einem oder mehreren der Ansprüche 3 oder 4, dadurch gekennzeichnet, daß dem wärmeisolierten Hydrophobierungssilo ein Wirbelbettreaktor nachgeschaltet wird, in dem das hydrophobierte SiO₂ auf 300 bis 350 °C erhitzt wird.

6. Verfahren nach einem oder mehreren der Ansprüche 1 bis 5, dadurch gekennzeichnet, daß das hydrophobierte Siliciumdioxid in einem Fließbett-Trockner entsäuert wird.

## Claims

1. Process for the continuous hydrophobicization with organohalosilanes of pyrogenic silica from silicon halide compounds, characterized in that methanol is used additionally.

2. Process according to Claim 1, characterized in that it is carried out at temperatures between 60 and 350°C.

3. Process according to one of Claims 1 or 2, characterized in that the hydrophobicization of the silica is carried out in a thermally insulated hydrophobicization silo.

4. Process according to Claim 4, characterized in that the thermally insulated hydrophobicization silo is equipped with a radioactive fill level sensor.

5. Process according to one or more of Claims 3 or 4, characterized in that the thermally insulated hydrophobicization silo has on the downstream side a fluidized bed reactor in which the hydrophobicized SiO₂ is heated to 300 - 350°C.

6. Process according to one or more of Claims 1 to 5, characterized in that the hydrophobicized silica is deacidified in a moving bed dryer.

## Revendications

1. Procédé pour l'hydrofugation en continu du dioxyde de silicium préparé à partir de composés halogéno-siliciés par pyrogénation à l'aide d'organohalogénosilanes, caractérisé en ce qu'on utilise de plus du méthanol.

2. Procédé selon la revendication 1 caractérisé en ce qu'on met en oeuvre le procédé à des températures comprises entre 60 et 350°C.

3. Procédé selon une des revendications 1 ou 2 caractérisé en ce qu'on met en oeuvre l'hydrofugation du dioxyde de silicium dans un silo d'hydrofugation à isolation thermique.

4. Procédé selon la revendication 3, caractérisé en ce que le silo d'hydrofugation à isolation thermique est équipé d'un indicateur de niveau radioactif.

5. Procédé selon une ou plusieurs des revendications 3 ou 4 caractérisé en ce que derrière le silo d'hydrofugation à isolation thermique, on relie à un réacteur à lit fluidisé dans lequel le SiO₂ hydrofugé est chauffé à une température de 300 à 350 °C.

6. Procédé selon une ou plusieurs des revendications 1 à 5, caractérisé en ce que le dioxyde de silicium hydrofugé est désacidifié dans un sécheur à lit fluidisé.
